# EUROPÄISCHE PATENTANMELDUNG

(11) **EP 4 699 845 A1**
(43) Veröffentlichungstag der Anmeldung: **25.02.2026**
(21) Anmeldenummer: 25191335.6
(22) Anmeldetag: 23.07.2025
(51) Int. Cl.: B60K 35/81, B60W 50/00, B60W 50/16

(54) **FAHRZEUG UND VERFAHREN ZUM BEREITSTELLEN WENIGSTENS EINES HINWEISSIGNALS AN EINE PERSON IN EINEM FAHRZEUG**

(30) Priorität: 23.08.2024 DE 102024208067
(71) Anmelder: VOLKSWAGEN AG, 38440 Wolfsburg (DE)
(72) Erfinder: Kehl, Leonie, 38440 Wolfsburg (DE); Heise, Cedric, 38440 Wolfsburg (DE); Vogt, Elias, 38440 Wolfsburg (DE); Schneible, Maxim, 38440 Wolfsburg (DE)

(57) **Zusammenfassung**

Um ein Verfahren zum Vermeiden des Auftretens der Reisekrankheit und/oder zum Reduzieren der Symptome der Reisekrankheit bereitzustellen, wird ein Verfahren zum Bereitstellen wenigstens eines Hinweissignals (19, 20, 21) an eine Person (24) in einem Fahrzeug (100) vorgeschlagen, umfassend die folgenden Schritte:
- Bestimmen des vorausliegenden Fahrabschnitts,
- Ermitteln von wenigstens einem Fahrereignis entlang des vorausliegenden Fahrabschnitts,
- Generieren von Hinweisdaten betreffend das Fahrereignis und Übertragen der Hinweisdaten an ein mobiles Endgerät (10a, 10b) und/oder eine Ausgabeeinrichtung (22),
- Generieren des wenigstens einen Hinweissignals (19, 20, 21) basierend auf den Hinweisdaten, und
- Ausgeben des Hinweissignals (19, 20, 21) mittels des mobilen Endgeräts (10a, 10b) und/oder der Ausgabeeinrichtung (22).

## Beschreibung

Die Erfindung betrifft ein Verfahren zum Bereitstellen wenigstens eines Hinweissignals an eine Person in einem Fahrzeug und ein Fahrzeug ausgebildet zur Durchführung eines solchen Verfahrens.

Reiseübelkeit oder Reisekrankheit (Carsickness) betrifft viele Menschen im Laufe ihres Lebens. Eine steigende Anfälligkeit wird durch die Einführung automatischer Fahrfunktionen erwartet und den damit einhergehenden Rollenwechsel, bei dem der Fahrende zum Beifahrenden wird. Eine Diskrepanz zwischen den sensorischen Informationen, die das Gehirn erhält, und den Erwartungen des Körpers während des autonomen Fahrens (oder auch bei der Nutzung anderer Verkehrsmittel) können zu den Symptomen der Reisekrankheit (Kinetose) führen. Diese Diskrepanz entsteht, wenn die visuellen Hinweise und die tatsächliche Bewegung des Körpers nicht übereinstimmen. Zudem kann es bei autonomen Fahrzeugen gelegentlich zu Bewegungen kommen, die unvorhersehbar sind oder von dem, was ein menschlicher Fahrer tun würde, abweichen. Diese unerwarteten Bewegungen können das Gefühl der Kontrolle und Vorhersehbarkeit verringern und die Wahrscheinlichkeit für Reiseübelkeit erhöhen. Diese können sich durch Übelkeit, Kopfschmerzen oder Schwindel bemerkbar machen.

Damit die durch den Rollenwechsel gewonnene Zeit von den Fahrzeuginsassen trotzdem effektiv genutzt werden kann, beispielsweise zum Lesen, Arbeiten etc., ohne unter Reiseübelkeit zu leiden, müssen effektive Gegenmaßnahmen entwickelt werden.

Eine Möglichkeit ist die Übermittlung von vibrotaktilem Feedback an den Fahrer oder Beifahrer. Ein solches System ist beispielsweise aus der DE 10 2022 112 961 A1 und der US 2022/0024459 A1 bekannt.

Ferner ist es bekannt, Reiseübelkeit entgegenzuwirken, in dem ein Fahrzeugsitz eingestellt wird, um eine Bewegung des Fahrzeuginsassen zu begrenzen, wie beispielsweise in der US 11,685,294 B2 beschrieben.

Zudem ist es aus der US 2021/0154430 A1 bekannt, durch unterschiedliche Maßnahmen wie das Ausspielen von visuellen Hinweisen oder Anpassen einer Temperatur und einer Beleuchtung im Fahrzeug die Symptome der Reiseübelkeit zu reduzieren.

Ferner ist es aus der US 2014/0055339 A1 bekannt, über ein mobiles Gerät gesammelte Daten im Zusammenhang mit einer Umgebung des mobilen Geräts auszugeben.

Der Erfindung liegt die Aufgabe zugrunde, ein Verfahren zum Vermeiden des Auftretens der Reisekrankheit und/oder zum Reduzieren der Symptome der Reisekrankheit bereitzustellen.

Diese Aufgabe wird durch die im Anspruch 1 angegebenen Merkmale gelöst. Weitere vorteilhafte Ausgestaltungen der Erfindung sind in den Unteransprüchen beschrieben.

Das Verfahren ermöglicht es vorteilhaft, das Auftreten bzw. die Symptome der Reisekrankheit zu verhindern bzw. zu reduzieren, indem zukünftige Fahrereignisse entlang eines vorausliegenden Fahrabschnitts des Fahrzeugs ermittelt werden und die Person im Fahrzeug frühzeitig auf die Fahrereignisse hingewiesen wird, sodass die Person die Möglichkeit hat, sich auf das bevorstehende Fahrereignis vorzubereiten bzw. sich auf das Fahrereignis einzustellen. Dies trägt dazu bei, das Auftreten von Symptomen wie Übelkeit, Kopfschmerzen oder Schwindel zu verhindern oder zumindest zu reduzieren.

Bei dem Fahrereignis handelt es sich insbesondere um solche Ereignisse, welche die Person bei vollständiger Übernahme der Fahraufgabe bewusst im Voraus wahrnehmen würde und sich somit vorbereiten kann. Übernimmt der Fahrer die Fahraufgabe nicht, da es sich um ein autonom gesteuertes Fahrzeug handelt, und/oder weil der Fahrer ein Beifahrer ist, ist der Fahrer nicht auf das bevorstehende Fahrereignis vorbereitet, sodass das Ausgeben des Hinweissignals, welches aus den Hinweisdaten generiert wurde, vorteilhaft bewirkt, dass die Person sich des vorstehenden Fahrereignisses bewusst wird und gegebenenfalls ihre Aufmerksamkeit auf die Bewegung des Fahrzeugs richten kann.

Die Ausgabe des Hinweissignals erfolgt insbesondere über ein mobiles Endgerät oder eine sonstige Ausgabeeinrichtung. Insbesondere die Ausgabe des Hinweissignals über das mobile Endgerät hat den Vorteil, dass der Fahrer effektiv auf das bevorstehende Fahrereignis hingewiesen wird, wenn sich der Fahrer ohnehin gerade in Interaktion mit dem mobilen Endgerät befindet. Dadurch kann mit Vorteil sichergestellt werden, dass das Hinweissignal die Person auch erreicht, während beispielsweise eine Ausgabe eines optischen Signals über ein Display eines Infotainmentsystems des Fahrzeugs leicht von der Person übersehen werden könnte, wenn die Person gerade auf das mobile Endgerät schaut.

Bevorzugt ist das mobile Endgerät ein Smartphone oder ein Laptop. Damit handelt es sich bei dem mobilen Endgerät mit Vorteil um ein Gerät, welches eine Person üblicherweise nutzt, während die Person nicht selbst das Fahrzeug steuert. Das Hinweissignal wird somit mit einer hohen Wahrscheinlichkeit von der Person wahrgenommen. Prinzipiell kann jedes mobile Endgerät genutzt werden, welches von den Fahrzeuginsassen während der Fahrt verwendet werden kann, insbesondere Smartphones, Tablets, Laptops, Smartwatches, E-Reader, Wearables und/oder Handheld-Konsolen.

Bevorzugt können die Hinweisdaten drahtlos, beispielsweise über eine Bluetooth-Verbindung, oder drahtgebunden, beispielsweise über einen USB-C-Anschluss, von dem Fahrzeug bzw. einer Fahrzeugsteuerung an das Endgerät übertragen werden. Auch das Endgerät kann Daten, beispielsweise Daten einer Erfassungseinrichtung, drahtlos oder drahtgebunden an das Fahrzeug bzw. die Fahrzeugsteuerung senden.

Bevorzugt ist das Hinweissignal ein optisches, akustisches oder ein haptisches Hinweissignal. Im Falle des mobilen Endgeräts kann beispielsweise ein optisches Signal über ein Display des mobilen Endgeräts ausgegeben werden, es kann ein haptisches Signal, insbesondere eine Vibration, mittels einer Vibrationserzeugungseinrichtung des Endgeräts ausgegeben werden, und/oder es kann ein akustisches Signal über einen Lautsprecher des Endgeräts ausgegeben werden. Insbesondere die Ausgabe eines optischen und/oder haptischen Signals über das mobile Endgerät ist vorteilhaft, da die Person in der Regel während der Fahrt auf das Endgerät schaut und das Hinweissignal so gut wahrnehmen kann. Ferner kann so vorteilhaft ermöglicht werden, dass das Hinweissignal nur von der Person wahrgenommen wird, welches mit dem Endgerät interagiert. Weitere Personen im Fahrzeug, welche kein Hinweissignal erhalten möchten und/oder müssen, wie beispielsweise ein Fahrer, welcher die Fahraufgabe übernimmt und nicht mit dem Endgerät interagiert, werden somit nicht durch das Hinweissignal gestört.

Visuelle bzw. optische Hinweissignale können Lichteffekte beinhalten, die auf eine Fahrtrichtungsänderung hinweisen. Beispielsweise kann/können eine sich in Fahrtrichtung bewegende Lichtleiste oder Pfeilmarkierungen diese Richtungsänderung ankündigen. Akustische Hinweissignale können Fahrtzustandsänderungen in natürlicher Sprache aufweisen und/oder abstrakte Hinweise, wie Töne, aufweisen. Haptische bzw. vibrotaktile Hinweissignale können unterschiedliche Vibrationsstärken, Vibrationsdauern sowie Muster aufweisen.

Bevorzugt ist die Ausgabeeinrichtung in dem Fahrzeug angeordnet. Die Ausgabeeinrichtung ist somit insbesondere eine Komponente des Fahrzeugs. Beispielsweise kann die Ausgabeeinrichtung ein Lautsprecher des Fahrzeugs zur Ausgabe des akustischen Hinweissignals, ein Display, beispielsweise eines Infotainmentsystems, oder ein oder mehrere Leuchtelemente zur Ausgabe des optischen Signals oder ein Aktor bzw. eine Vibrationserzeugungseinrichtung zur Ausgabe des haptischen Signals sein. Bevorzugt kann das Fahrzeug mehr als eine Ausgabeeinrichtung aufweisen, wobei die Ausgabeeinrichtungen entweder das gleiche Hinweissignal oder unterschiedliche Hinweissignale ausgeben.

Bevorzugt können sowohl eine oder mehrere Ausgabeeinrichtungen im Fahrzeug vorgesehen sein und zusätzlich das mobile Endgerät zur Ausgabe von Hinweissignalen. Dadurch wird eine besonders effektive Ausgabe der Hinweissignale erreicht. Auch können dadurch sowohl Personen erreicht werden, welche mit einem Endgerät interagieren, als auch solche Personen, welche nicht mit einem Endgerät interagieren.

Bevorzugt weist das mobile Gerät eine Erfassungseinrichtung auf, welche erfasst, ob die Person mit einem mobilen Endgerät interagiert, wobei bei Feststellung einer Interaktion der Person mit dem Endgerät zumindest ein optisches Hinweissignal ausgegeben wird, und/oder wobei bei Feststellung einer fehlenden Interaktion der Person mit dem Endgerät zumindest ein akustisches oder ein haptisches Hinweissignal ausgegeben wird. Das Feststellen der Interaktion mit dem Endgerät kann die Erkennung umfassen, dass die Person das Endgerät in der Hand hält, und/oder dass die Person das Endgerät betrachtet. Dazu kann das Endgerät bevorzugt entsprechende Sensoren umfassen.

Die Ausgabe des Hinweissignals erfolgt in beiden Fällen insbesondere über das mobile Endgerät. Alternativ kann das mobile Endgerät auch nur zur Feststellung der Interaktion verwendet werden, und die Ausgabe des Hinweissignals erfolgt dann über eine der Ausgabeeinrichtungen.

Dadurch kann die Ausgabe des Hinweissignals mit Vorteil an die derzeitige Tätigkeit der Person angepasst werden. Interagiert die Person mit dem Endgerät, in dem die Person beispielsweise das Endgerät betrachtet, ist davon auszugehen, dass optische Hinweissignale besonders gut wahrgenommen werden, sodass diese ausgespielt werden. Wird erkannt, dass die Person das Endgerät in der Hand hält, ist davon auszugehen, dass haptische Signale besonders gut wahrgenommen werden, sodass entsprechend haptische Signale ausgespielt werden. Bei der Feststellung fehlender Interaktion werden bevorzugt akustische Signale ausgespielt, da davon ausgegangen werden kann, dass die Person die optischen und/oder haptischen Hinweissignale, welche über das Endgerät ausgespielt werden, nicht oder nur unzureichend wahrnimmt. Alternativ kann in diesem Fall die Ausgabe des haptischen und/oder optischen Signals über die Ausgabeeinrichtung im Fahrzeug erfolgen.

Bevorzugt ist das Fahrereignis ein charakteristischer Beschleunigungsverlauf, ein charakteristischer Lenkverlauf, ein charakteristischer Geschwindigkeitsverlauf, eine Wetterlage, eine Fahrbahnbeschaffenheit oder ein Verkehrsaufkommen entlang des vorausliegenden Fahrabschnitts. Bevorzugt können eines oder mehrere der vorstehenden Fahrereignisse auf dem vorausliegenden Fahrabschnitt festgestellt werden. Ein charakteristischer Beschleunigungsverlauf kann beispielsweise ein Bremsen bzw. eine positive Beschleunigung sein, welche einen vorbestimmten Beschleunigungswert überschreitet. Ferner kann ein charakteristischer Lenkverlauf eine Kurvenfahrt angeben. Dabei kann insbesondere auch der Kurvenradius und/oder eine Geschwindigkeit, mit welcher die Kurve voraussichtlich gefahren wird, berücksichtigt werden, um basierend hierauf unterschiedliche Hinweissignale auszugeben. Eine Person kann somit mit Vorteil vor besonders engen und/oder schnell gefahrenen Kurven gewarnt werden. Ein charakteristischer Geschwindigkeitsverlauf kann das Unterschreiten oder Überschreiten vorbestimmter Geschwindigkeitswerte und/oder eine vorbestimmte Anzahl an Geschwindigkeitsänderungen in einem vorbestimmten Zeitraum sein. Eine Wetterlage kann das Vorhandensein von Regen, Schnee und/oder Nebel umfassen. Da diese Wetterlagen plötzliche Bremsmanöver und/oder eine instabile Fahrt des Fahrzeugs zur Folge haben können, kann der Fahrer bereits vorab hiervor gewarnt werden. Eine Fahrbahnbeschaffenheit kann beispielsweise die Oberfläche der Fahrbahn angeben, beispielsweise, ob es sich um Kopfsteinpflaster, einen Sandweg und/oder eine unebene Fahrbahn handelt. Das Verkehrsaufkommen kann die Anzahl von Fahrzeugen auf dem zurückliegenden und/oder dem vorausliegenden Fahrabschnitt sein. Bei dichtem Verkehr kann mit vermehrtem Bremsen und Beschleunigen des Fahrzeugs gerechnet werden, wovor die Person mit Vorteil gewarnt werden kann.

Bevorzugt kann zur Erfassung des Fahrereignisses ein Umfeldsensor des Fahrzeugs herangezogen werden. Dieser kann insbesondere die Wetterlage, die Fahrbahnbeschaffenheit und/oder das Verkehrsaufkommen erfassen. Alternativ oder zusätzlich kann die zugrundeliegende Datenmenge beispielsweise aus Kartendaten, Regelungsdaten (z.B. aus einer MPC (Model Predictive Control) Regelung für das autonome Fahren) des Fahrzeugs oder zur Verfügung gestellten externen Informationen (C2X, Cloud Daten, Internet) erhalten werden.

Bevorzugt können Daten über den voraussichtlichen Beschleunigungsverlauf, voraussichtlichen Geschwindigkeitsverlauf und/oder voraussichtlichen Lenkverlauf bevorzugt aus einer Fahrzeugsteuerung und/oder der externen Einrichtung empfangen werden, welche Trajektorien aus vergangenen Fahrten speichert und zur Verfügung stellt, sofern ein vorausliegender Fahrabschnitt schon einmal befahren wurde. Ferner können diese Daten aus Navigationsdaten abgeleitet werden.

Aus den über die zuvor beschriebenen Datenquellen erhaltenen Daten wird bevorzugt ein vorausliegender Fahrabschnitt bestimmt, welcher das oder die Fahrereignisse aufweist. Hieraus werden Hinweisdaten generiert. Dieser Schritt kann in einer Steuereinrichtung des Fahrzeugs erfolgen. Aus den Hinweisdaten kann dann je nach Anwendungsfall bzw. je nachdem, über welchen Weg die Ausgabe des Hinweises an die Person erfolgen soll, das Hinweissignal, insbesondere durch die Ausgabeeinrichtung bzw. das mobile Gerät, erstellt und ausgegeben werden.

Bevorzugt ist die Ausgabeeinrichtung eine Vibrationserzeugungseinheit zur Erzeugung eines vibrotaktilen Hinweissignals. Insbesondere ist die Ausgabeeinrichtung bzw. die Vibrationserzeugungseinheit an bzw. in dem Fahrzeug angeordnet, sodass das vibrotaktile Hinweissignal, welches ein haptisches Hinweissignal ist, in Richtung der Person, insbesondere in Richtung einer Vorderseite der Person, emittiert wird.

Bevorzugt umfasst das vibrotaktile Hinweissignal Ultraschallschwingungen, wobei die Vibrationserzeugungseinheit einer Sitzposition der Person gegenüberliegend angeordnet ist, sodass das Hinweissignal in Richtung der Person emittiert wird. Diese Ultraschallschwingungen können mit Vorteil die Kleidung der Person durchdringen, sodass die Ultraschallschwingungen auf der Haut der Person wahrnehmbar sind. Somit ist eine optimale Wahrnehmung des Hinweissignal unabhängig von der Beschaffenheit der Kleidung gegeben.

Bevorzugt kann die Vibrationserzeugungseinheit mehrere, beispielsweise zwei oder drei, Ultraschallemitter aufweisen, welche Ultraschallwellen in Richtung eines gemeinsamen Fokuspunktes emittieren, an welchem sich die Ultraschallwellen treffen, wobei der Fokuspunkt sich an einer Position befindet, an welcher die Person typischerweise im Fahrzeug befindlich ist. Der Fokuspunkt ist jener Punkt, an welcher die Person die Ultraschallwellen besonders effektiv wahrnimmt. Bevorzugt können auch mehrere solcher Fokuspunkte vorgesehen sein. Insbesondere kann bzw. können ein Fokuspunkt oder mehrere Fokuspunkte jeweils in der rechten und in der linken Körperhälfte der Person vorgesehen sein, um insbesondere Lenkvorgänge durch vibrotaktile Hinweise in der rechten bzw. linken Körperhälfte anzukündigen.

Bevorzugt ist die Vibrationserzeugungseinheit zur Erzeugung des vibrotaktilen Hinweissignals in einem Sitz und/oder in einem Anschnallgurt ausgebildet bzw. angeordnet. Dazu können ein oder mehrere entsprechende Aktoren in dem Sitz und/oder dem Anschnallgurt angeordnet sein. Die Vibrationserzeugungseinheit bzw. die Aktoren sind bei Anordnung im Anschnallgurt bevorzugt nur in jenem Bereich des Anschnallgurts angeordnet, welcher am Bauch der Person anliegt, insbesondere einem unteren Teil des Anschnallgurts. Über die vibrotaktilen Hinweissignale können die Fahrereignisse angekündigt werden, beispielsweise kommende Beschleunigungen, welche beispielsweise 1 Sekunde vor dem Auftreten angekündigt werden. Ferner können im Bereich einer Rückenlehne des Sitzes Aktoren angeordnet sein. Bevorzugt können Aktoren seitlich bzw. links und rechts in der Rückenlehne angeordnet sein, über welche besonders intuitiv eine vorausliegende Links-bzw. Rechtskurve angekündigt werden kann durch Ausgeben einer Vibration durch den rechten Aktor bei einer Rechtskurve und Ausgeben einer Vibration durch den linken Aktor bei einer Linkskurve. Die Hinweise können so zum einen das Sicherheitsgefühl der Insassen verbessern und zum anderen die Anpassung der Körperhaltung auf die entsprechende Fahrzeugbewegung ermöglichen und damit zu weniger Reisekrankheit führen.

Bevorzugt umfasst das Verfahren den Schritt des Einstellens wenigstens eines Stützelements eines Sitzes des Fahrzeugs vor dem Fahrereignis derart, dass ein Bewegungsraum der Person senkrecht zur Fortbewegungsrichtung des Fahrzeugs verringert wird. Es soll mit anderen Worten eine Bewegung des Körpers der Person oder Teilen davon zur Seite verhindert werden.

Bevorzugt kehrt das Stützelement nach dem Fahrereignis in seine Ausgangsform und/oder Ausgangsposition zurück. Dadurch wird die Person mit Vorteil nicht dauerhaft in ihrer Bewegung eingeschränkt.

Bevorzugt ist das Stützelement seitlich an dem Sitz angeordnet zum Abstützen eines Rumpfes und/oder eines Kopfs der Person. Insbesondere befindet sich seitlich wenigstens je ein Stützelement je Körperregion.

Insbesondere kann es sich bei dem Stützelement demnach um eine Kopfstütze bzw. zwei seitliche Kopfstützen handeln. Alternativ oder zusätzlich können seitliche Rumpfstützen vorgesehen sein. Diese können entsprechend eine vordefinierte Zeit vor dem Eintreten des Fahrereignisses derart eingestellt werden, dass eine Bewegung des Kopfes bzw. des Rumpfes der Person eingeschränkt wird.

Bevorzugt ist das Stützelement oder die Stützelemente zur Verringerung des Bewegungsraums der Person bewegbar, insbesondere rotierbar, und/oder expandierbar. Beispielsweise kann das Stützelement demnach mit einem Gelenk klappbar an dem Sitz bzw. dem Fahrzeug befestigt sein, um zum Beschränken der Bewegungsfreiheit der Person rotiert werden zu können. Zusätzlich oder alternativ kann das Stützelement expandierbar ausgebildet sein, beispielsweise in Form eines variabel mit Luft befüllbaren Kissens bzw. Luftkammern. Ähnlich der Funktion eines Airbags kann das Stützelement mit Luft gefüllt werden, um die Stützfunktion zu verstärken bzw. durch Verändern seiner Größe die Bewegung des Körperteils einzuschränken.

Bevorzugt können die Stützelemente sowohl in einer ersten als auch in einer zweiten Sitzreihe des Fahrzeugs angeordnet sein. Da insbesondere in der zweiten Sitzreihe in der Regel wenig Seitenhalt vorhanden ist, können die Stützelemente hier besonders vorteilhaft zum Einsatz kommen.

Um die Bewegung von Personen, die nicht unter Reisekrankheit bzw. Kinetose leiden, oder von Personen, die sich auf die Fahrt konzentrieren, nicht zu beeinträchtigen, sollen die Sitzbegrenzungen aktiviert und deaktiviert werden können. Dies kann durch mechanisches Zuschalten, indem beispielsweise das Stützelement heruntergeklappt werden kann, oder durch Luftkammern, die per Knopfdruck befüllt bzw. entleert werden können, passieren.

Ferner können die Sitze derart ausgestaltet sein, dass diese gegenüber herkömmlichen Sitzen eine geringere Bewegungsfreiheit in seitlicher Richtung aufweisen. Insbesondere können die Sitze Schalensitze sein.

Die erfindungsgemäße Aufgabe wird ferner gelöst durch ein Fahrzeug ausgebildet zur Durchführung eines Verfahrens gemäß einer der vorgenannten Ausführungsformen. Das Fahrzeug kann insbesondere die Steuereinrichtung, die Ausgabeeinrichtung und die Erfassungseinrichtung umfassen.

Nachfolgend werden Ausführungsbeispiele der Erfindung anhand der Zeichnungen näher erläutert. Es zeigen:
- Fig. 1: eine schematische Darstellung einer Datenverbindung zwischen einem Fahrzeug und einem mobilen Endgerät zum Bereitstellen eines Hinweissignals,
- Fig. 2: einen schematischen Aufbau der Komponenten des Fahrzeugs und des mobilen Endgeräts,
- Fig. 3: ein mobiles Endgerät zur Bereitstellung mehrerer Hinweissignale, und
- Fig. 4: ein Fahrzeug umfassend mehrere Ausgabeeinrichtungen zur Ausgabe unterschiedlicher Hinweissignale.

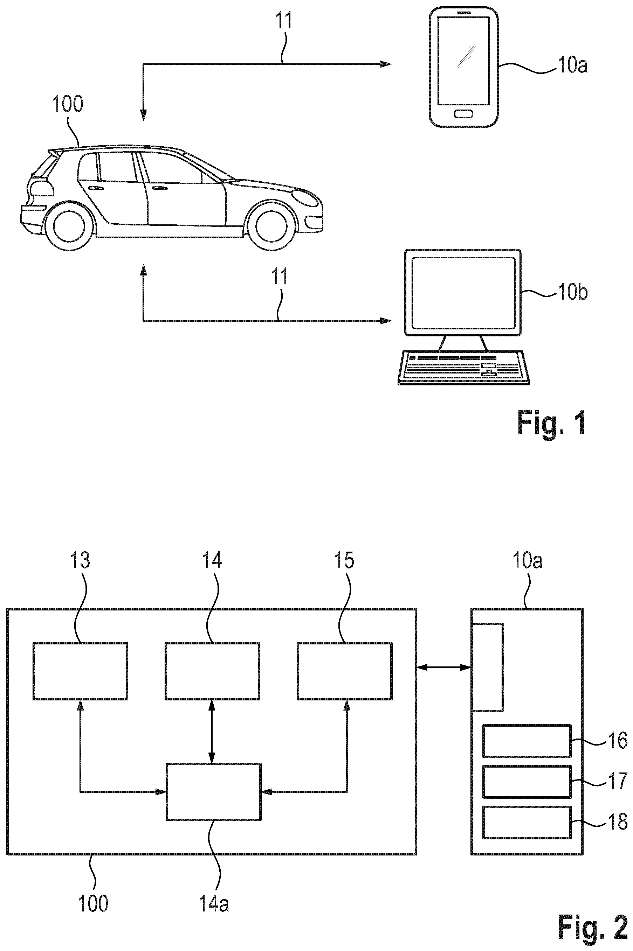

In den Figuren weisen dieselben konstruktiven Elemente jeweils dieselben Bezugsziffern auf. Figur 1 zeigt ein Fahrzeug 100, welches zur Kommunikation mit mobilen Endgeräten 10a, 10b über eine drahtlose Datenverbindung 11 ausgebildet ist. Bei dem mobilen Endgerät kann es sich um ein Smartphone 10a oder um einen Laptop 10b handeln, welcher von einer Person 100 in dem Fahrzeug genutzt wird.

Figur 2 zeigt den schematischen Aufbau der Komponenten des Fahrzeugs 100 und des mobilen Endgeräts, welches als Smartphone 10a ausgebildet ist, zum Generieren der Hinweisdaten und des Hinweissignals. Das Fahrzeug 100 umfasst unterschiedliche Quellen, aus denen Daten bezogen werden können, um Hinweisdaten über Fahrereignisse auf einem vorausliegenden Fahrabschnitt zu generieren. Zu den Quellen zählt eine Navigationseinrichtung 13, über welche Navigationsdaten, insbesondere eine geplante Route, erhalten werden können. Ferner können Daten aus einer Steuereinrichtung 14 des Fahrzeugs zum autonomen Steuern empfangen werden. Eine solche Steuereinrichtung 14 kann beispielsweise prädiktive Daten über den vorausliegenden Fahrabschnitt bereitstellen, beispielsweise aus einer MPC (Model Predictive Control) Regelung. Weitere Daten können von einer externen Kommunikationseinrichtung 15 erhalten werden. Die Kommunikationseinrichtung 15 des Fahrzeugs kann beispielsweise Daten von einem Server oder von weiteren Fahrzeugen, insbesondere drahtlos, empfangen.

Die Kommunikationseinrichtung 15 kann ferner dazu ausgebildet sein, die Hinweisdaten, welche mittels einer Steuereinrichtung 14a des Fahrzeugs 100 basierend auf den empfangenen Daten generiert wurden, an das mobile Endgerät 10a, in diesem Fall ein Smartphone, zu senden. Das Smartphone umfasst ein Display 16, auf welchem optische Hinweissignale angezeigt werden können, einen Lautsprecher 17 zur Ausgabe von akustischen Signalen sowie eine Vibrationserzeugungseinrichtung 18 zur Ausgabe eines haptischen Signals. Aus den Hinweisdaten können dann das optische, akustische und/oder haptische Signal generiert und über das Display 16, den Lautsprecher 17 und/oder die Vibrationserzeugungseinrichtung 18 ausgegeben werden.

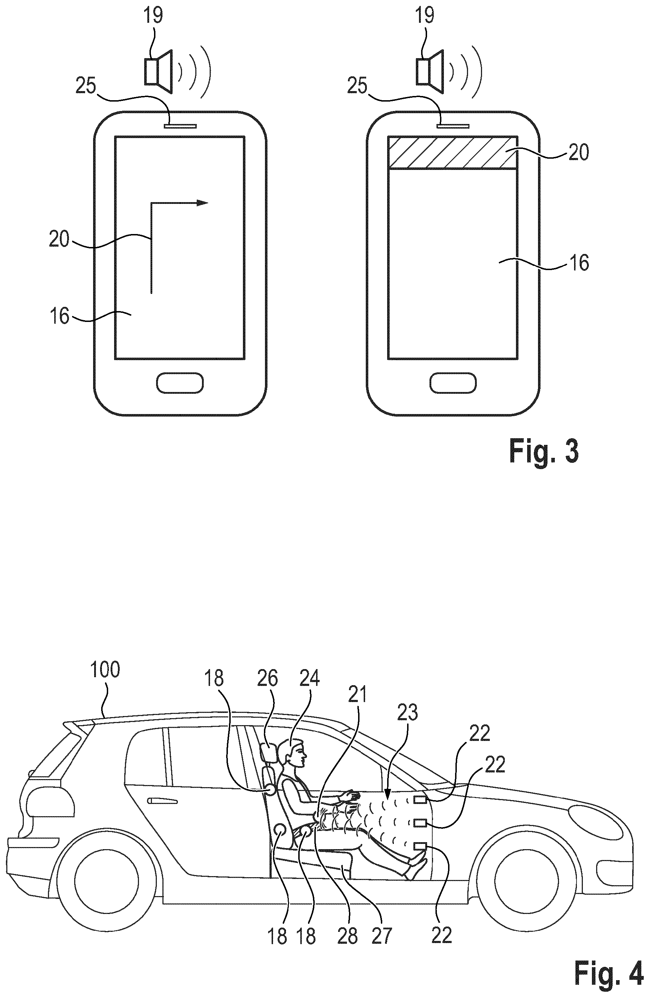

Figur 3 zeigt die Ausgabe des akustischen Signals 19 sowie des optischen Signals 20. Das optische Signal 20 kann eine Anzeige einer Richtung umfassen, in welcher eine vorausliegende Kurvenfahrt erfolgt. Ferner können Nachrichten, beispielsweise in Form einer Pop-Up-Nachricht, an einem Rand des Displays 16 des mobilen Endgeräts 16 eingeblendet werden.

Ferner umfasst das mobile Endgerät 10a eine Erfassungseinrichtung 25, beispielsweise eine Kamera, zum Erfassen einer Interaktion einer Person 24 mit dem mobilen Endgerät 10a.

Figur 4 zeigt ein Fahrzeug 100 mit einer Person 24 und verschiedenen Ausgabeeinrichtungen 18, 22 zur Ausgabe haptischer bzw. vibrotaktiler Hinweissignale 21.

Zum einen sind Ultraschallaktoren 22 in einem vorderen Bereich des Fahrzeugs 100 angeordnet, welche Ultraschallwellen 23 in Richtung der Person 24 im Fahrzeug 100 emittieren. Die Ultraschallwellen 23 werden derart von den Ultraschallaktoren 22 ausgegeben, dass die Ultraschallwellen im Bereich der Position der Person 24 in einem Fokuspunkt interferieren und dort das haptische bzw. vibrotaktile Hinweissignal 18 bilden, welches die Person 24 auf der Haut wahrnimmt.

Ferner sind in einem Sitz 27 Vibrationserzeugungseinrichtungen 18 angeordnet. Weiterhin weist ein Anschnallgurt 28, insbesondere im Bereich eines hüftseitigen Abschnitts, eine Vibrationserzeugungseinrichtung 18 zur Ausgabe von haptischen Hinweissignalen bzw. Vibrationen auf.

Abschließend zeigt die Figur 4 ein Stützelement 26 des Sitzes 27, welches zum Einschränken einer Bewegung der Person bei Bevorstehen eines Fahrereignisses, insbesondere bei Kurvenfahrten, bewegbar ist. Bei dem Stützelement 26 handelt es sich insbesondere um eine Kopfstütze, welche seitlich angeordnet ist und ausklappbar ist.

### Bezugszeichenliste

- 100: Fahrzeug

- 10a, b: mobiles Endgerät
- 11: Datenverbindung
- 12: Ausgabeeinrichtung
- 13: Navigationseinrichtung
- 14: Steuereinrichtung zur MPC-Regelung
- 14a: Steuereinrichtung des Fahrzeugs
- 15: Kommunikationseinrichtung
- 16: Display
- 17: Lautsprecher
- 18: Vibrationserzeugungseinrichtung
- 19: akustisches Hinweissignal
- 20: optisches Hinweissignal
- 21: haptisches Hinweissignal
- 22: Ultraschallaktor
- 23: Ultraschall
- 24: Person
- 25: Erfassungseinrichtung
- 26: Stützelement
- 27: Sitz
- 28: Anschnallgurt

## Patentansprüche

1. Verfahren zum Bereitstellen wenigstens eines Hinweissignals (19, 20, 21) an eine Person (24) in einem Fahrzeug (100), umfassend die folgenden Schritte:
- Bestimmen des vorausliegenden Fahrabschnitts,
- Ermitteln von wenigstens einem Fahrereignis entlang des vorausliegenden Fahrabschnitts,
- Generieren von Hinweisdaten betreffend das Fahrereignis und Übertragen der Hinweisdaten an ein mobiles Endgerät (10a, 10b) und/oder eine Ausgabeeinrichtung (22),
- Generieren des wenigstens einen Hinweissignals (19, 20, 21) basierend auf den Hinweisdaten, und
- Ausgeben des Hinweissignals (19, 20, 21) mittels des mobilen Endgeräts (10a, 10b) und/oder der Ausgabeeinrichtung (22).

2. Verfahren nach Anspruch 1, wobei das mobile Endgerät ein Smartphone (10a) oder ein Laptop (10b) ist.

3. Verfahren nach einem der vorgenannten Ansprüche, wobei das Hinweissignal ein optisches, akustisches oder ein haptisches Hinweissignal (19, 20, 21) ist.

4. Verfahren nach einem der vorgenannten Ansprüche, wobei die Ausgabeeinrichtung (22) in dem Fahrzeug (100) angeordnet ist.

5. Verfahren nach einem der vorgenannten Ansprüche, wobei das mobile Endgerät (10a, 10b) eine Erfassungseinrichtung (25) aufweist, welche erfasst, ob die Person (24) mit einem mobilen Endgerät (10a, 10b) interagiert, wobei bei Feststellung einer Interaktion der Person (24) mit dem Endgerät (10a, 10b) zumindest ein optisches Hinweissignal (20) ausgegeben wird, und/oder wobei bei Feststellung einer fehlenden Interaktion der Person (24) mit dem Endgerät (10a, 10b) zumindest ein akustisches oder ein haptisches Hinweissignal (19, 21) ausgegeben wird.

6. Verfahren nach einem der vorgenannten Ansprüche, wobei das mobile Endgerät (10a. 10b) das Hinweissignal (19, 20, 21) ausgibt.

7. Verfahren nach einem der vorgenannten Ansprüche, wobei das Fahrereignis ein charakteristischer Beschleunigungsverlauf, ein charakteristischer Lenkverlauf, ein charakteristischer Geschwindigkeitsverlauf, eine Wetterlage, eine Fahrbahnbeschaffenheit oder ein Verkehrsaufkommen entlang des vorausliegenden Fahrabschnitts ist.

8. Verfahren nach einem der vorgenannten Ansprüche, wobei die Ausgabeeinrichtung (22) eine Vibrationserzeugungseinheit (18) zur Erzeugung eines vibrotaktilen Hinweissignals (21) ist.

9. Verfahren nach einem der vorgenannten Ansprüche, wobei das vibrotaktile Hinweissignal (21) Ultraschallschwingungen (23) umfasst, und wobei die Vibrationserzeugungseinheit (18) einer Sitzposition der Person (24) gegenüberliegend angeordnet ist, sodass das Hinweissignal (21) in Richtung der Person emittiert wird.

10. Verfahren nach einem der vorgenannten Ansprüche, wobei die Vibrationserzeugungseinheit (18) zur Erzeugung des vibrotaktilen Hinweissignals (21) in einem Sitz (27) und/oder in einem Anschnallgurt (28) ausgebildet ist.

11. Verfahren nach einem der vorgenannten Ansprüche, umfassend den Schritt des Einstellens wenigstens eines Stützelements (26) eines Sitzes (27) des Fahrzeugs (100) vor dem Fahrereignis derart, dass ein Bewegungsraum der Person (24) senkrecht zur Fortbewegungsrichtung des Fahrzeugs (100) verringert wird.

12. Verfahren nach Anspruch 11, wobei das Stützelement (26) nach dem Fahrereignis in seine Ausgangsform und/oder Ausgangsposition zurückkehrt.

13. Verfahren nach Anspruch 11 oder 12, wobei das Stützelement (26) seitlich an dem Sitz angeordnet ist zum Abstützen eines Rumpfes und/oder eines Kopfs der Person (24).

14. Verfahren nach einem der Ansprüche 11 bis 13, wobei das Stützelement (26) zur Verringerung des Bewegungsraums der Person (24) bewegbar, insbesondere rotierbar, und/oder expandierbar ist.

15. Fahrzeug (100), ausgebildet zur Durchführung eines Verfahrens nach einem der vorgenannten Ansprüche.
